# EUROPÄISCHE PATENTSCHRIFT

(11) **EP 3 416 814 B1**
(45) Veröffentlichungstag und Bekanntmachung des Hinweises auf die Patenterteilung: **01.12.2021**
(21) Anmeldenummer: 17705393.1
(22) Anmeldetag: 15.02.2017
(51) Int. Cl.: B29C 69/00, B29C 65/02, B29C 65/62, B29C 65/72, B29C 44/14, B29C 65/10, B29C 65/14, B29C 65/16, B29C 65/18, B29L 31/30, B60R 13/02

(54) **VERFAHREN ZUM VERSIEGELN EINES NAHTBEREICHS**
METHOD FOR SEALING A SEAM REGION
PROCÉDÉ POUR SCELLER UNE ZONE DE COUTURE

(30) Priorität: 19.02.2016 DE 102016202592
(43) Veröffentlichungstag der Anmeldung: 26.12.2018
(73) Patentinhaber: FRIMO Group GmbH, 49504 Lotte (DE)
(72) Erfinder: MASSBAUM, Oliver, 49504 Lotte (DE); BÄUMKER, Jürgen, 49504 Lotte (DE)
(74) Vertreter: Hoffmann Eitle
(86) Internationale Anmeldenummer: PCT/EP2017/053379
(87) Internationale Veröffentlichungsnummer: WO 2017/140714

(56) Entgegenhaltungen:
- FR-A- 886 765
- FR-A1- 2 813 774
- US-A1- 2015 321 449

## Beschreibung

### Technisches Gebiet

Die vorliegende Erfindung betrifft ein Verfahren zur Herstellung eines Verkleidungsbauteils, wobei bei einer Kunststoffhaut Stichkanäle im Bereich einer Naht der Kunststoffhaut, insbesondere einer PVC- (Polyvinylchlorid) bzw. TPU (thermoplastisches Polyuretan)-(Slush)-Haut, versiegelt werden, welche PVC- bzw. TPU-Haut für ein Schäumbauteil vorgesehen ist. Derartige Schäumbauteile werden insbesondere als Innenausstattungsbauteile, beispielsweise als eine Instrumententafel, Türverkleidungen, Amaturenauflagen,im Bereich des Automobilbaus, eingesetzt..

### Stand der Technik

Es ist bereits bekannt, eine Naht (Faden/Garn) in eine Kunststoff-Haut einzubringen, um die optische Ausgestaltung einer solchen Haut positiv zu beeinflussen. Zunächst wird eine Haut mit einem solchen Garn versehen, anschließend in ein Schäumwerkzeug eingelegt und im Zuge eines Schäumprozesses mit einem formstabilen Träger verbunden.

Nachdem die genannten Häute an ihrer Sichtseite bspw. eine Lederoptik imitieren, werten Echtnähte das derart hergestellte Lederimitat weiter auf, da dem Betrachter ein Nahtbereich suggeriert wird, wie dieser beispielsweise zur Verbindung von getrennten Lederhäuten zu erwarten wäre.

Allerdings kommt es beim Schäumprozess im Bereich der Naht oftmals zu Komplikationen, da das Schäummaterial im Zuge des Schäumprozesses durch die Stichkanäle, durch die das Garn durch die PVC bzw. TPU-Haut dringt, zur Sichtseite der Haut austreten könnte, sofern die Stichkanäle nicht durch den jeweiligen Garnabschnitt ausreichend abgedichtet werden. Derartige Qualitätsmängel sind nicht akzeptabel und würden zu hohen Ausschussraten führen.

Im Stand der Technik wurden deshalb bereits verschiedene Maßnahmen ergriffen, um die beim Setzen der Naht entstehenden Stichkanäle vor dem Schäumprozess zu verschließen.

Beispielsweise ist das Dokument US 2013/0260086 A1 bekannt, welches ein mit Schaum gefülltes Paneel mit einer dekorativen Naht betrifft. Die Stiche können dabei versiegelt wurden, um ein Austreten des Schaums zu verhindern, wenn dieser zwischen einem Träger und einer Haut eingespritzt wird. Dabei schlägt die US 2013/0260086 A1 vor, dass die Stiche durch haftendes Anbringen einer Membran entlang der Länge der Stiche versiegelt werden, wodurch die Öffnungen abgedeckt werden. Als eine weitere alternative Maßnahme wird vorgeschlagen, ein expandierbares Garn einzusetzen. Dabei kann das Garn unter Einfluss von Feuchtigkeit seinen Durchmesser erhöhen. Auf diese Weise werden die Stiche abgedichtet.

Ein weiteres Dokument ist die DE 10 2014 107 108 A1 bekannt, die ein Verfahren zum Ausstatten eines mehrschichtigen Formkörpers mit einer Ziernaht zeigt. Der Formkörper weist dabei zumindest ein Kernteil und ein Überzugsteil auf. Dabei soll der Wirkbereich eines Werkzeugs zumindest teilweise durch das Überzugsteil hindurch in das Kernteil eingebracht werden, wobei in den Wirkbereich ein Nahtbereich des Garnmaterials angeordnet ist. Ferner soll der Wirkbereich des Werkzeugs aus dem Formkörper derart ausgebracht werden, dass der Nahtbereich im Kernteil verbleibt, und dass eine Verbindung zwischen dem Kernteil und dem Nahtbereich aktiviert wird, sodass ein Positionshalten des Nahtbereichs im Kernteil gewährleistet ist. Dabei kann das Kernmaterial einen thermisch aktivierbaren Verbindungsanteil, insbesondere einen thermisch aktivierbaren Schmelzklebstoff, aufweisen, wobei das Aktivieren der Verbindung zwischen dem Kernteil und dem Nahtbereich durch Erwärmen zumindest des Kernteils erfolgt. In einer Ausführungsform liegt der thermisch aktivierbare Verbindungsanteil zumindest vor dem Aktivieren der Verbindung als Beschichtung auf dem Garnmaterial vor, und in einer weiteren Ausführungsform ist der thermisch aktivierbare Verbindungsanteil zumindest vor dem Aktivieren der Verbindung als Garn in das Garnmaterial eingewoben.

Ferner ist das Dokument DE 10 2015 106 964 A1 bekannt, das eine Innenverkleidung mit abgedichteten Nähnähten zeigt. Die Nähnadellöcher werden dabei durch ein elastomeres Material abgedichtet, bevor eine Schaumschicht auf der nicht sichtbaren Seite der Deckschicht gebildet wird, um zu verhindern, dass der sich ausdehnende Schaum durch die Nadellöcher ausläuft und auf der sichtbaren Seite der Verkleidung sichtbar wird. Das elastomere Material wird anfänglich als eine viskose Flüssigkeit aufgebracht, die formuliert ist, um auszuhärten, und die durch Sprühen aufgebracht werden kann, wodurch es ermöglicht wird, dass sich Nähnahtlinien entlang komplexen Umrissen der Verkleidung befinden. Beispielsweise ist eine Latexemulsion eine geeignete Art einer solchen viskosen Flüssigkeit.

Als weitere Dokumente sind die FR 886 765 A sowie die FR 2 813 774 A1 bekannt.

### Gegenstand der Erfindung

Die vorliegende Erfindung zielt darauf ab, ein einfaches und kostengünstiges Verfahren zur Herstellung eines Verkleidungsbauteils unter Verwendung einer Kunststoffhaut, insbesondere einer PVC- oder TPU-Haut, bereitzustellen.

Der Gegenstand des Anspruchs 1 bietet ein entsprechendes Verfahren. Weitere bevorzugte Ausführungsformen sind in den abhängigen Ansprüchen aufgeführt.

Die vorliegende Erfindung stellt ein Verfahren bereit, um Stichkanäle im Nahtbereich einer Kunststoffhaut, insbesondere einer PVC- oder TPU-(Slush)-Haut (Polyvinylchlorid bzw. thermoplastisches Polyurethan), zu versiegeln. Bevorzugt verlaufen die Stichkanäle dabei im Wesentlichen senkrecht zur Rückseite der Kunststoffhaut durch diese hindurch, wobei ein Garn durch die Stichkanäle verläuft.

Die Kunststoffhaut wird hergestellt mit den folgenden Schritte: Bereitstellen einer mit zumindest einem Garn versehenen Kunststoffhaut, die eine Sichtseite sowie eine Rückseite aufweist, und zwar derart, dass die Rückseite der Kunststoffhaut zugänglich ist, und Erwärmen, Erhitzen oder Schmelzen der Rückseite der Kunststoffhaut im Nahtbereich derart, dass sich die Kunststoffhaut im Bereich der Stichkanäle an das Garn anlegt. Die Kunststoffhaut weist beispielsweise eine genarbte Oberfläche an einer Sichtseite auf.

Im Rahmen der vorliegenden Erläuterung wird der Begriff "Garn" verwendet. Der Begriff "Garn" umfasst in diesen Zusammenhang begrifflich einen Faden. Ferner kann der Ausdruck "Faden" auch den Begriff "Garn" ersetzen. Das Garn/ der Faden kann aus mehreren Fasern gewebt, gestrickt, gewirkt oder getuftet sein.

Das erfindungsgemäße Verfahren wird zur Verarbeitung der Kunststoffhaut verwendet, die beispielsweise für ein Verkleidungsbauteil für ein Automobil verwendet wird. Der Einsatz einer derart verarbeiteten Haut ist jedoch nicht auf den Automobilbereich beschränkt. Vielmehr kann es sich generell um Verkleidungsbauteile handeln, rein beispielhaft für Flugzeuginnenausstattung.

Bevorzugt handelt es sich bei der Kunststoffhaut um eine sogenannte Slush-Haut. Slush-Häute werden in einem urformenden Verfahren aus einem Kunststoffmaterial hergestellt. Im Rahmen der Erfindung wird als Kunststoffmaterial bevorzugt PVC oder TPU verwendet.

Das erfindungsgemäße Verfahren hat den Vorteil, dass durch lokales thermisches Einwirken die beim Einbringen des Garns in die Haut entstehenden Stichkanäle sicher verschlossen werden. Dabei hat sich gezeigt, dass bereits eine lokale Erwärmung, bspw. mittels einer Flamme oder mittels Heißluft, im Nahtbereich zu einer dauerhaften Verformung der Haut führt, sodass sich die Haut an das Garn anlegt und ggf. im Falle von höheren Temperaturen mit diesem verklebt wird, ohne ein zusätzliches Versiegelungsmaterial oder eine Abdeckfolie im Nahtbereich aufbringen zu müssen. Nachdem neben einer Vorrichtung zum thermischen Einwirken keine weiteren Hilfsmittel erforderlich sind, kann das Verfahren zum Versiegeln eines Nahtbereichs radikal vereinfacht werden. Dies gilt insbesondere im Falle von PVC-bzw. TPU-Häuten, die durch das thermische Einwirken (Erwärmen/Erhitzen) zeitweise elastisch werden und sich somit an dem durch den Stichkanal verlaufenden Garn anlegen können.

Gemäß einer Ausführungsform ist es bevorzugt, dass das Erwärmen/Erhitzen der Kunststoffhaut mittels einer Erwärmungseinrichtung durchgeführt wird, wobei eine Relativbewegung zwischen der Erwärmungseinrichtung und der Haut vorgesehen ist. Auf diese Weise ist es möglich, ein Versiegeln von Stichkanälen in gleichbleibender Qualität zu erreichen. Gemäß einer Variante wird die Erwärmungseinrichtung bewegt, während die Kunststoffhaut stationär gehalten wird.

In diesem Zusammenhang ist es bevorzugt, dass die Erwärmungseinrichtung ein Gasbrenner, eine elektrische Heißquelle oder eine Heißluftquelle ist. Ein Gasbrenner, eine elektrische Heißquelle als auch eine Heißluftquelle ermöglichen eine relativ genaue Dosierung der an der Kunststoffhaut aufzubringenden Wärme. Ein Gasbrenner hat darüber hinaus den Vorteil, dass der Wärmeeintragsbereich optisch wahrnehmbar ist, so dass während des Verfahrens erkennbar ist, ob ein ausreichend großer Bereich der thermischen Einwirkung unterworfen wird. Eine Heißluftquelle ist eine relativ kostengünstige und im Einsatz äußerst zuverlässige Erwärmungseinrichtung, zu deren Betrieb lediglich elektrische Energie zuzuführen ist.

Alternativ kann auch eine Druckrolle mit Wärmequelle oder Druckkufe mit Wärmequelle eingesetzt werden. Diese Einrichtungen haben den Vorteil, dass neben einer Erwärmung gleichzeitig Druck auf die Haut ausgeübt wird und somit eine mechanisch bedingte Verformung stattfindet.

Als eine weitere Möglichkeit kann eine Infrarotquelle, ein Heizelement bzw. eine Heizplatte oder ein Laser zum Einsatz kommen. Diese ermöglichen eine besonders exakte Prozessführung.

Bevorzugt ist, dass das zumindest eine Garn ein hitzebeständiges bzw. feuerbeständiges Garn ist. Auf diese Weise wird sicher verhindert, dass das Garn an der Rückseite der Kunststoffhaut durch den Verfahrensschritt des Erwärmens durchtrennt wird.

Gemäß einer weiteren Ausführungsform der vorliegenden Erfindung ist es vorgesehen, dass beim Schritt des Bereitstellens der Kunststoffhaut diese mit der Sichtseite auf eine ebene Auflage, insbesondere einen Maschinentisch, aufgelegt wird. Auf diese Weise ist eine äußerst sichere Prozessführung möglich.

Gemäß einer weiteren Variante wird die Kunststoffhaut beispielsweise in ein Schäumwerkzeug eingelegt. Auf diese Weise kann nach Versiegeln des Nahtbereichs ein Schäumprozess durchgeführt werden.

Insbesondere wird beim Erwärmen der Rückseite der Kunststoffhaut im Nahtbereich diese zumindest teilweise angeschmolzen. Durch lokales Anschmelzen der Kunststoffhaut, insbesondere einer Haut aus PVC (Polyvinylchlorid), wird ein Verformen dieser erreicht, so dass ggf. vorliegende Schlitze zwischen der Kunststoffhaut und das Garn im Bereich der Stichkanäle verschlossen werden können.

Gemäß einer Variante der vorliegenden Erfindung ist die Kunststoffhaut mit zwei voneinander beabstandeten Garnen versehen, die einen gemeinsamen Nahtbereich definieren, wobei das Erwärmen der Rückseite der Kunststoffhaut im gemeinsamen Nahtbereich in einem Durchlauf durchgeführt wird. Auf diese Weise kann eine sogenannte Ziernaht, welche zwei parallel zueinander verlaufende Garne umfasst, zügig mit dem erfindungsgemäßen Verfahren bearbeitet werden.

Ferner betrifft die vorliegende Erfindung ein Verfahren zur Herstellung eines Innenraumverkleidungsbauteils für ein Automobil unter Verwendung einer Kunststoffhaut, die gemäß einer der zuvor beschriebenen Ausführungsformen hergestellt wurde.

Es ist bevorzugt, dass beim Erwärmen der Rückseite der Kunststoffhaut im Nahtbereich, oder nachfolgend, eine mechanische Einwirkung im Nahtbereich durchgeführt wird, insbesondere mittels einer Druckrolle oder einer Druckkufe. Auf diese Weise können die durch die Erwärmung elastischeren oder angeschmolzenen Abschnitte der Kunststoffhaut zusätzlich verformt werden, um den Nahtbereich zu versiegeln.

Die Druckeinwirkung kann dabei, wie bereits erläutert, durch eine kombinierte Druckrolle/Druckkufe mit Wärmequelle oder alternativ durch getrennte Einrichtungen, insbesondere eine Druckrolle/Druckkufe und eine Erwärmungseinrichtung, wie einen Gasbrenner, eine Heißluftquelle, eine Infrarotquelle, ein Heizelement, einen Lötkolben oder einen Laser stattfinden.

Es ist weiter bevorzugt, einen Oberflächenbereich der Kunststoffhaut auf eine Temperatur von mindestens 80°C, bevorzugt mindestens 100°C zu erwärmen. Beispielsweise kann eine Temperatur im Nahtbereich zumindest abschnittsweise auf mindestens 110°C gewählt werden. Auf diese Weise wird der erwärmte Bereich elastisch, um sich an das Garn anzulegen.

Hierbei ist es gemäß einer Zielrichtung der vorliegenden Erfindung möglich, die Kunststoffhaut unmittelbar vor dem Verfahren zur Herstellung des Innenraumverkleidungsbauteils dem zuvor beschriebenen Verfahren zu unterziehen. Insbesondere ist es möglich, eine mit einem Garn versehene Kunststoffhaut in ein Werkzeug zur Herstellung des Innenverkleidungsbauteils einzulegen und dort dem erfindungsgemäßen Verfahren zum Versiegeln eines Nahtbereichs einer Kunststoffhaut zu unterwerfen. Auf diese Weise kann eine relativ kurze Verarbeitungszeit sichergestellt werden.

Gemäß einer anderen Zielrichtung werden das Verfahren zum Versiegeln eines Nahtbereichs einer Kunststoffhaut und das Verfahren zur Herstellung eines Innenverkleidungsbauteils unter Verwendung einer derartigen Kunststoffhaut zeitlich und örtlich getrennt voneinander durchgeführt.

### Kurze Beschreibung der Zeichnungen

- Fig. 1: ist eine schematische Querschnittsansicht eines Bereichs einer PVC-Haut, in die ein Garn eingebracht wurde

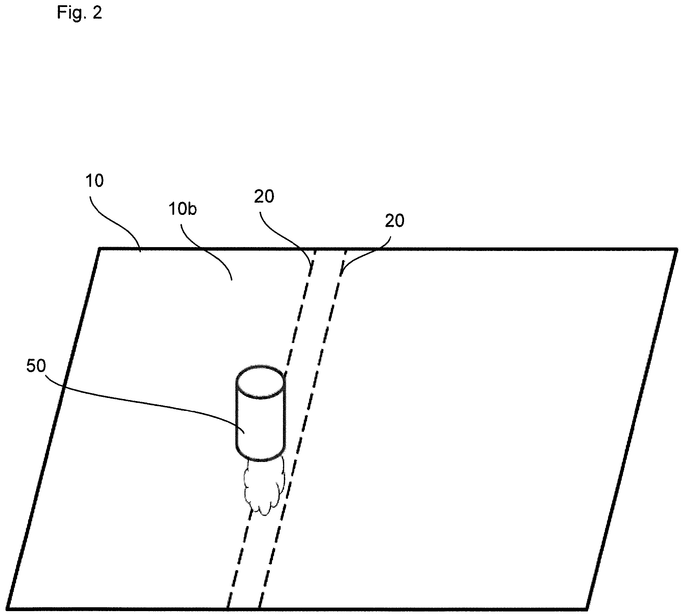

- Fig. 2: ist eine perspektivische Draufsicht auf eine Unterseite einer Haut mit eingebrachtem Garn

### Detaillierte Beschreibung der bevorzugten Ausführungsformen

Nachfolgend wird anhand der beigefügten Figuren eine bevorzugte Ausführungsform der vorliegenden Erfindung im Detail beschrieben. Weitere in diesem Zusammenhang genannte Modifikationen bestimmter Merkmale können jeweils einzeln miteinander kombiniert werden, um neue Ausführungsformen auszubilden.

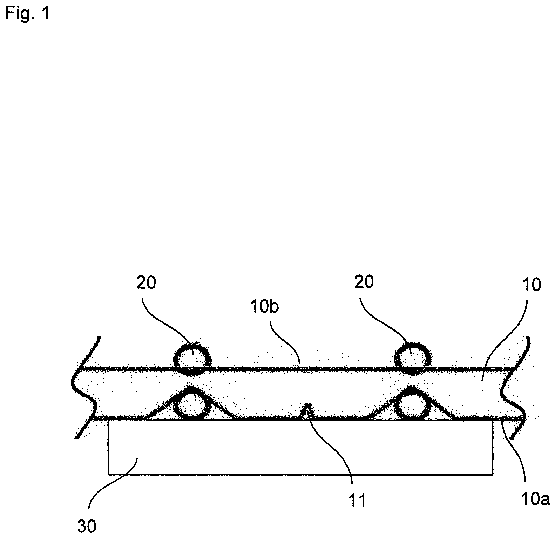

Der in Fig. 1 gezeigte Querschnitt stellt schematisch einen Nahtbereich einer PVC- oder TPU-Slush-Haut 10 (im Rahmen der vorliegenden Ausführungsform nachfolgend auch als "Haut" bezeichnet) dar. Die Haut 10 umfasst eine Sichtseite 10a, die üblicherweise mit einer Narbung, beispielsweise zur Nachahmung einer Lederoberfläche, versehen ist, sowie eine Rückseite 10b. Die Rückseite 10b bildet bei einem mit einer Haut 10 versehenen Schäumbauteil die nicht sichtbare Innenseite.

In der beschriebenen Ausführungsform wurden in die Haut 10 in einem bestimmten Abstand zueinander Garne 20 eingenäht, welche die Haut 10 entlang ihres Verlaufs abwechselnd von der Sichtseite 10a zur Rückseite 10b und umgekehrt durch Stichkanäle durchdringen. Die Garne 20 sind dabei aus einem feuerfesten bzw. schwer entflammbaren Material ausgebildet. An der Sichtseite 10a der Haut 10 (in Fig. 1 unten) ist ferner eine Kerbe 11 vorgesehen, in deren Bereich die Haut 10 eine Vertiefung aufweist, um einen Verbindungsbereich zweier Häute zu imitieren.

Im Zuge des erfindungsgemäßen Verfahrens wird die Haut 10 mit der Sichtseite 10a auf eine Auflage 30 derart aufgelegt, dass die Rückseite 10b der Haut 10, die im Zuge eines späteren Schäumprozesses mit dem Schäummaterial (bevorzugt Polyurethan) oder eines thermoplastischen Elastomers in Kontakt tritt, zugänglich ist.

Zur Versiegelung der Stichkanäle der Nähte wird nunmehr ein lokales thermisches Einwirken mittels einer Erwärmungseinrichtung 50 durchgeführt. Im vorliegenden Ausführungsbeispiel wird dieses thermische Einwirken mittels einer Flamme, einem Lötkolben oder mittels Heißluft stattfinden. Entsprechend ist die Erwärmungseinrichtung 50 als Gasbrenner, Lötkolben oder Heißluftgebläse ausgebildet.

Hierzu wird eine Erwärmungseinrichtung 50 entlang des Nahtbereichs der Haut 10 geführt und dabei die Haut 10 in diesem Bereich erwärmt. Durch die Erwärmung findet eine temporäre Erweichung der Haut 10 im Nahtbereich statt, sodass sich die Haut 10 an das Garn 20 anlegt und somit die Stichkanäle abdichtet bzw. versiegelt.

Auch ist es gemäß einer weiteren Modifikation möglich, eine kombinierte Druck- und Erwärmungseinrichtung einzusetzen, bspw. eine Druckrolle/Druckkufe mit einer Wärmequelle.

Auch ist es möglich, zunächst eine Erwärmung des Nahtbereich durchzuführen, und anschließend, während sich die Haut 10 im Nahtbereich zumindest teilweise noch im erwärmten Zustand befindet, eine Druckeinwirkung durchzuführen.

Dabei kann die Haut 10 auf mindestens 80°, bevorzugt mindestens 100°C, weiter bevorzugt mindestens 120° erwärmt werden. Ein maximaler Temperaturbereich liegt bei beispielsweise 2000°C.

Nach Abkühlen der Haut verbleibt diese in diesem Zustand, so dass während eines nachfolgenden Schäumvorgangs, im Zuge dessen die Haut 10 mit einem formstabilen Träger mittels insbesondere Polyurethan verbunden wird, kein Schaummaterial zur Sichtseite dringen kann.

Auch wenn es gemäß der beschriebenen bevorzugten Ausführungsform bevorzugt ist, dass die Haut 10 auf eine stationär angeordnete Auflage aufgebracht wird und die Erwärmungseinrichtung 50 bewegt wird, ist es gemäß einer Alternative möglich, die Haut 10 auf eine bewegliche Auflage (bewegbaren Tisch) aufzulegen, und somit eine Relativbewegung zwischen Haut 10 und Erwärmungseinrichtung herbeizuführen. Ferner kann gemäß einer weiteren Variante sowohl die Auflage mit der Haut als auch die Erwärmungseinrichtung bewegt werden.

## Patentansprüche

1. Verfahren zur Herstellung eines Verkleidungsbauteils, insbesondere eines Innenraumverkleidungsbauteils, unter Verwendung einer Kunststoffhaut (10), insbesondere einer PVC- oder TPU-Slush-Haut, wobei die Kunststoffhaut (10) einen Nahtbereich aufweist,
wobei im Nahtbereich durch Einbringen eines Garns (20) in die Kunststoffhaut (10) Stichkanäle in dieser vorliegen, wobei ein Versiegeln des Nahtbereichs der Kunststoffhaut ein
- Bereitstellen einer mit zumindest einem Garn (20) versehenen Kunststoffhaut (10), die eine Sichtseite (10a) sowie eine Rückseite (10b) aufweist, derart, dass die Rückseite (10b) der Kunststoffhaut (10) zugänglich ist, und ein
- Erwärmen der Rückseite (10b) der Kunststoffhaut (10) im Nahtbereich derart, dass sich die Kunststoffhaut (10) im Bereich der Stichkanäle an das Garn (20) anlegt, umfasst,
wobei die Herstellung des Verkleidungsbauteils die Schritte umfasst:
Einlegen der Kunststoffhaut (10) und eines formstabilen Trägers in ein Formwerkzeug,
Einbringen eines Füllmaterials, insbesondere eines Polyurethanschaum oder eines thermoplastischen Elastomers, in einen Bereich zwischen der Rückseite (10b) der Kunststoffhaut (10) und den formstabilen Träger.

2. Verfahren gemäß Anspruch 1, **dadurch gekennzeichnet, dass** zum Versiegeln des Nahtbereichs das Erwärmen der Kunststoffhaut (10) mittels einer Erwärmungseinrichtung (50) durchgeführt wird, wobei eine Relativbewegung zwischen der Erwärmungseinrichtung (50) und der Haut (10) vorgesehen wird.

3. Verfahren gemäß Anspruch 2, **dadurch gekennzeichnet, dass** zum Versiegeln des Nahtbereichs die Erwärmungseinrichtung (50) ein Gasbrenner, eine Heißluftquelle, Infrarotquelle, Heizelement, Lötkolben, eine Druckrolle mit Wärmequelle oder Druckkufe mit Wärmequelle, oder Laser ist.

4. Verfahren gemäß einem der vorangegangenen Ansprüche, **dadurch gekennzeichnet, dass** zum Versiegeln des Nahtbereichs das zumindest eine Garn (20) ein feuerbeständiges Garn ist.

5. Verfahren gemäß einem der vorangegangenen Ansprüche, **dadurch gekennzeichnet, dass**, beim Versiegeln des Nahtbereichs, beim Schritt des Bereitstellens der Kunststoffhaut (10) diese mit der Sichtseite (10a) auf eine Auflage (30), insbesondere einen Maschinentisch, aufgelegt oder in eine Werkzeughälfte eines Schäumwerkzeuges eingelegt wird.

6. Verfahren gemäß einem der vorangegangenen Ansprüche, **dadurch gekennzeichnet, dass** zum Versiegeln des Nahtbereichs beim Erwärmen der Rückseite (10b) der Kunststoffhaut (10) im Nahtbereich die Kunststoffhaut zumindest teilweise angeschmolzen wird.

7. Verfahren gemäß einem der vorangegangenen Ansprüche, **dadurch gekennzeichnet, dass** zum Versiegeln des Nahtbereichs die Kunststoffhaut (10) mit zwei voneinander beabstandeten Garnen (20) versehen ist, die einen gemeinsamen Nahtbereich definieren, wobei das Erwärmen der Rückseite der Kunststoffhaut (10) im gemeinsamen Nahtbereich in einem Durchlauf durchgeführt wird.

8. Verfahren gemäß einem der vorangegangenen Ansprüche, **dadurch gekennzeichnet, dass** zum Versiegeln des Nahtbereichs die Stichkanäle im Wesentlichen senkrecht zur Rückseite (10b) der Kunststoffhaut (10) durch diese hindurch verlaufen.

9. Verfahren gemäß einem der vorangegangenen Ansprüche, **dadurch gekennzeichnet, dass** zum Versiegeln des Nahtbereichs die Haut im Nahtbereich zumindest abschnittsweise auf eine Temperatur von mindestens 80°C, bevorzugt mindestens 100°C, weiter bevorzugt mindestens 110°C, erwärmt wird.

10. Verfahren gemäß einem der vorangegangenen Ansprüche, **dadurch gekennzeichnet, dass** zum Versiegeln des Nahtbereichs beim Erwärmen der Rückseite (10b) der Kunststoffhaut (10) im Nahtbereich, oder nachfolgend, eine mechanische Einwirkung im Nahtbereich durchgeführt wird, insbesondere mittels einer Druckrolle oder einer Druckkufe.

## Claims

1. Method for manufacturing a panel component, in particular an interior panel component, using a plastic skin (10), in particular a PVC or TPU slush skin, wherein the plastic skin (10) having a seam region,
wherein in the seam region by introducing a yarn (20) into the plastic skin (10) stitch openings are present therein, wherein a sealing of the seam region of the plastic skin comprises:
- providing a plastic skin (10) provided with at least one yarn (20) and having a visible side (10a) and a rear side (10b) such that the rear side (10b) of the plastic skin (10) is accessible, and
- heating the rear side (10b) of the plastic skin (10) in the seam region such that the plastic skin (10) contacts the yarn (20) in the region of the stitch openings,
wherein the manufacturing of the panel component comprises the steps of:
placing the plastic skin (10) and a dimensionally stable carrier in a moulding tool,
inserting a filling material, in particular a polyurethane foam or a thermoplastic elastomer, in a region between the rear side (10b) of the plastic skin (10) and the dimensionally stable carrier.

2. Method according to claim 1, **characterised in that** for the sealing of the seam region, the heating of the plastic skin (10) is carried out by means of a heating device (50), with a relative movement being provided between the heating device (50) and the skin (10).

3. Method according to claim 2, **characterised in that** for the sealing of the seam region, the heating device (50) is a gas burner, a hot air source, an infrared source, a heating element, a soldering iron, a pressure roller with a heat source or pressure pad with a heat source, or a laser.

4. Method according to one of the preceding claims, **characterised in that** for the sealing of the seam region, the at least one yarn (20) is a fire-resistant yarn.

5. Method according to one of the preceding claims, **characterised in that**, when sealing the seam region, in the step of providing the plastic skin (10), the skin is placed with the visible side (10a) on a support (30), in particular a machine table, or is inserted into a mould half of a foaming tool.

6. Method according to one of the preceding claims, **characterised in that** for the sealing of the seam region, when heating the rear side (10b) of the plastic skin (10) in the seam region, the plastic skin is at least partially melted.

7. Method according to one of the preceding claims, **characterised in that** for the sealing of the seam region, the plastic skin (10) is provided with two yarns (20) spaced apart from one another which define a common seam region, wherein the heating of the rear side of the plastic skin (10) in the common seam region being carried out in a single pass.

8. Method according to one of the preceding claims, **characterised in that** for the sealing of the seam region, the stitch openings extend substantially perpendicular to and through the rear side (10b) of the plastic skin (10).

9. Method according to one of the preceding claims, **characterised in that** for the sealing of the seam region, the skin in the seam region is heated at least in parts to a temperature of at least 80°C, preferably at least 100°C, further preferred at least 110°C.

10. Method according to one of the preceding claims, **characterised in that** for the sealing of the seam region, when heating the rear side (10b) of the plastic skin (10) in the seam region, or subsequent thereto, a mechanical influence is exerted in the seam region, in particular by means of a pressure roller or a pressure pad.

## Revendications

1. Procédé de fabrication d'un composant de revêtement, en particulier d'un composant de revêtement d'espace intérieur, en utilisant une peau en matière plastique (10), en particulier une peau en PVC ou TPU-Slush, dans lequel la peau en matière plastique (10) présente une zone de couture,
dans lequel dans la zone de couture, par introduction d'un fil (20) dans la peau en matière plastique (10), des canaux de piqûre se présentent dans celle-ci, dans lequel un scellage de la zone de couture de la peau en matière plastique comprend une
- fourniture d'une peau en matière plastique (10) pourvue d'au moins un fil (20) qui présente un côté visible (10a), ainsi qu'un côté arrière (10b) de telle manière que le côté arrière (10b) de la peau en matière plastique (10) soit accessible, et un
- chauffage du côté arrière (10b) de la peau en matière plastique (10) dans la zone de couture de telle manière que la peau en matière plastique (10) se place dans la zone des canaux de piqûre contre le fil (20),
dans lequel la fabrication du composant de revêtement comprend les étapes :
d'insertion de la peau en matière plastique (10) et d'un support indéformable dans un outil de moulage,
d'introduction d'un matériau de remplissage, en particulier d'une mousse de polyuréthane ou d'un élastomère thermoplastique, dans une zone entre le côté arrière (10b) de la peau en matière plastique (10) et le support indéformable.

2. Procédé selon la revendication 1, **caractérisé en ce que** pour le scellage de la zone de couture le chauffage de la peau en matière plastique (10) est réalisé au moyen d'un dispositif de chauffage (50), dans lequel un mouvement relatif est prévu entre le dispositif de chauffage (50) et la peau (10).

3. Procédé selon la revendication 2, **caractérisé en ce que** pour le scellage de la zone de couture le dispositif de chauffage (50) est un brûleur à gaz, une source d'air chaud, une source à infrarouge, un élément chauffant, un fer à souder, un galet de pression avec une source de chaleur ou un patin de pression avec une source de chaleur, ou un laser.

4. Procédé selon l'une quelconque des revendications précédentes, **caractérisé en ce que** pour le scellage de la zone de couture l'au moins un fil (20) est un fil ignifuge.

5. Procédé selon l'une quelconque des revendications précédentes, **caractérisé en ce que** pour le scellage de la zone de couture, lors de l'étape de la fourniture de la peau en matière plastique (10), celle-ci est placée avec le côté visible (10a) sur un support (30), en particulier un plateau de machine, ou est insérée dans une moitié d'outil d'un outil de moussage.

6. Procédé selon l'une quelconque des revendications précédentes, **caractérisé en ce que** pour le scellage de la zone de couture lors du chauffage du côté arrière (10b) de la peau en matière plastique (10) dans la zone de couture, la peau en matière plastique est fondue au moins partiellement.

7. Procédé selon l'une quelconque des revendications précédentes, **caractérisé en ce que**, pour le scellage de la zone de couture, la peau en matière plastique (10) est pourvue de deux fils (20) espacés l'un de l'autre qui définissent une zone de couture commune, dans lequel le chauffage du côté arrière de la peau en matière plastique (10) est réalisé dans la zone de couture commune dans un passage.

8. Procédé selon l'une quelconque des revendications précédentes, **caractérisé en ce que** pour le scellage de la zone de couture, les canaux de piqûre s'étendent sensiblement perpendiculairement au côté arrière (10b) de la peau en matière plastique (10) à travers celui-ci.

9. Procédé selon l'une quelconque des revendications précédentes, **caractérisé en ce que** pour le scellage de la zone de couture, la peau dans la zone de couture est chauffée au moins par sections à une température d'au moins 80 °C, de préférence au moins 100 °C, plus préférentiellement d'au moins de 110 °C.

10. Procédé selon l'une quelconque des revendications précédentes, **caractérisé en ce que**, pour le scellage de la zone de couture lors du chauffage du côté arrière (10b) de la peau en matière plastique (10) dans la zone de couture, ou par la suite, une action mécanique est réalisée dans la zone de couture, en particulier au moyen d'un rouleau de pression ou d'un patin de pression.
